# EUROPEAN PATENT APPLICATION

(11) **EP 1 350 555 A1**
(43) Date of publication of application: **08.10.2003**
(21) Application number: 01953308.2
(22) Date of filing: 24.07.2001
(51) Int. Cl.: B01D 63/02, B01D 65/02

(54) **HOLLOW YARN MEMBRANE MODULE, HOLLOW YARN MEMBRANE MODULE UNIT, AND METHOD OF PRODUCING HOLLOW YARN MEMBRANE MODULES**

(30) Priority: 02.08.2000 JP 2000234464
(71) Applicant: TORAY INDUSTRIES, INC., Tokyo 103-8666 (JP)
(72) Inventor: AKIMOTO, Tatsuo, Otsu-shi Shiga 520-2152 (JP); FUJINO, Hisaaki, Hikone-shi Shiga 521-1113 (JP); OKUMURA, Seiji, Otsu-shi Shiga 520-0844 (JP); NISHIMURA, Tetsuo, Otsu-shi Shiga 520-0844 (JP); HATANO, Yukio, Kurita-gun Shiga 520-3034 (JP)
(74) Representative: Weber, Joachim, Dr.
(86) International application number: JP0106378
(87) International publication number: WO02011867

(57) **Abstract**

A hollow fiber membrane module having a structure, in which raw water is supplied into a filtration chamber containing a hollow fiber membrane and surrounded by a first sealing body having the open ends of the numerous hollow fiber membranes constituting the hollow fiber membrane bundle, a cylindrical case and a second sealing means, through a raw water supply port formed in the cylindrical case at a position near the second sealing body, and in which the drain of backwashing is discharged through a drain port formed in the second sealing body.

## Description

### Technical Field

The invention relates to a hollow fiber membrane module, hollow fiber membrane module unit and a manufacturing method of a hollow fiber membrane module. In more detail, it relates to a hollow fiber membrane module that allows its filtration performance to be stably maintained by efficiently removing the suspended matter of the raw water deposited in the hollow fiber membrane module during use by means of backwashing, and also relates to a manufacturing method thereof and a hollow fiber membrane module unit using the same. The hollow fiber membrane module and the hollow fiber membrane module unit using the same of the invention can be preferably used for filtering the raw water, to produce drinking water or to produce feed water to be fed to a purified water producing apparatus in which a reverse osmosis membrane is used.

### Background Art

Hollow fiber membrane modules are generally classified into an internal pressure type and an external pressure type.

An external pressure type hollow fiber membrane module is composed of a hollow fiber membrane bundle consisting of hundreds to tens of thousands of hollow fiber membranes and a cylindrical case containing the hollow fiber membrane bundle inside. The cylindrical case is sealed at both the ends thereof by means of sealing bodies fastened to the inner wall surface of the cylindrical case. A space in the cylindrical case between both the sealing bodies forms a filtration chamber in which the hollow fiber membrane bundle is positioned.

In one case, the hollow fiber membrane bundle is contained into the filtration chamber in the state that hollow portions of the respective hollow fiber membranes are attached to one of the sealing bodies with their ends opened at the outside surface of the sealing body, and attached to the other sealing body with their ends closed or opened at the outside surface of the sealing body. In the other case, the hollow fiber membrane bundle is contained into the filtration chamber in the state that hollow portions of the respective hollow fiber membranes are attached to one of the sealing bodies with their both ends opened at the outside surface of the sealing body, while the entire hollow fiber membranes are curved in U-shape.

A flowable resin penetrates into the clearances between the respective hollow fiber membranes constituting the hollow fiber membrane bundle, and is solidified later and integrated with the hollow fiber membranes. The solidified resin is also integrated with the inner wall surface of the cylindrical case, to form the sealing bodies. The formation of the sealing bodies by means of resin is called potting. The resin used for the potting is called a sealing resin or potting compound.

In advance of the potting, the end portion of the hollow portion of each of the hollow fiber membranes is sealed by penetrating a resin into the hollow portion or crushing the hollow portion. After potting, where an opening of the hollow portion of each of the hollow fiber membranes at the outer surface of the sealing body is needed, a portion of the sealing body formed by the potting is cut out and removed to remove the hollow portion previously sealed.

The filtration chamber of the hollow fiber membrane module formed like this is supplied with raw water under pressurization. The raw water permeates the respective hollow fiber membranes in the filtration chamber and reaches the hollow portions of the respective hollow fiber membranes. In this process, the raw water is filtered into a filtrate. The filtrate is discharged from the openings of the respective hollow fiber membranes.

JP 09-220446 A discloses an example of external pressure type hollow fiber membrane module. The supply port of raw water in this hollow fiber membrane module comprises a plurality of through-holes each of which has a small diameter, provided in the sealing body in which the respective hollow fiber membrane ends are sealed with a resin. This document describes that since the raw water supply ports are provided, the water used for washing away the suspended matter deposited inside after continuous use of the hollow fiber membrane module can be excellently discharged.

However, the inventors examined the raw water supply ports formed as plural through-holes having a small diameter in the sealing body, and as a result, found that in the case where washing treatment (backwashing treatment) was carried out to let the filtrate flow from the openings of the respective hollow fiber membranes through the hollow portions to the outside surfaces of the respective hollow fiber membranes, for keeping the filtration performance of the hollow fiber membranes good, the suspended matter desorbed from the surfaces of the hollow fiber membranes was partially deposited in the raw water supply port comprising a plurality of through-holes each of which has a small diameter and in spaces existing in the downstream side in the flowing direction of the backwashing water, when the suspended matter passed through the through-holes and the spaces together with drain. That is, a phenomenon that the suspended matter was partially caught in the spaces and through-holes was observed.

As a result, when raw water was supplied again through the spaces and through-holes after completion of backwashing, the suspended matter deposited in the spaces and through-holes was again returned into the filtration chamber and deposited on the surfaces of the hollow fiber membranes. This phenomenon is considered to be the reason why the filtration performance of the hollow fiber membrane module disclosed in the document cannot be recovered so much as expected even after backwashing treatment.

It is an object of the invention to provide a hollow fiber membrane module that overcomes the problem of the prior art.

It is also an object of the invention to provide a hollow fiber membrane module that can sufficiently maintain the washing effect in the case where the suspended matter existing in the filtration chamber to lower the filtration performance of the hollow fiber membrane bundle is efficiently discharged by backwashing treatment and where the raw water is supplied again to start the production of filtrate, that is, to provide a hollow fiber membrane module having stable filtration performance.

It is an object of the invention is to provide a method for producing the hollow fiber membrane module having stable filtration performance.

### Disclosure of the Invention

The hollow fiber membrane module of the invention to achieve the above objects comprises
(a) a cylindrical case,
(b) a first sealing body provided for sealing one end of the cylindrical case,
(c) a second sealing body provided for sealing the other end of the cylindrical case,
(d) a first cap provided for the cylindrical case outside the first sealing body,
(e) a second cap provided for the cylindrical case outside the second sealing body,
(f) a filtration chamber formed by the inner wall surface of the first sealing body, the inner wall surface of the second sealing body and the inner wall surface of the cylindrical case,
(g) a first chamber formed by the inner wall surface of the first cap and the outer wall surface of the first sealing body,
(h) a second chamber formed by the inner wall surface of the second cap and the outer wall surface of the second sealing body,
(i) a hollow fiber membrane bundle accommodated in the filtration chamber and attached to the first sealing body, with one end of the bundle opened toward the first chamber, and attached to the second sealing body, with the other end of the bundle closed against the second chamber; or attached to the first sealing body, with both the ends of the bundle opened toward the first chamber, the entire bundle being curved in U-shape,
(j) a raw water supply port formed in the cylindrical case and opened toward the filtration chamber at a position near the second sealing body,
(k) an air discharge port formed in the cylindrical case and opened toward the filtration chamber at a position near the first sealing body,
(l) fluid flow holes for allowing the flow of air and drain, formed in the second sealing body through the second sealing body from the filtration chamber,
(m) a filtrate delivery port formed in the first cap and opened toward the first chamber, and
(n) a drain port formed in the second cap and opened toward the second chamber.

According to the hollow fiber membrane module of the invention, since the raw water supply port is formed on a lateral face of the cylindrical case forming the filtration chamber, the raw water supply port can be separate from the drain port for the drain of backwashing, and it can be ensured that the suspended matter is not deposited in the portions where the raw water passes. In the case the raw water is supplied again after completion of backwashing, it does not happen that the suspended matter goes into the filtration chamber, and the filtration performance of the hollow fiber membrane module can be stably maintained.

On the other hand, it can happen that backwashing causes the suspended matter to be deposited in the fluid flow holes, but the suspended matter flows into the filtration chamber together with compressed air during aeration flushing, and is discharged together with air from the air discharge port. So, the suspended matter is not deposited in the hollow fiber membrane bundle, and it can be prevented that the filtration performance of the hollow fiber membrane module is deteriorated.

In the hollow fiber membrane module of the invention, it is preferable that the minimum lateral cross sectional area defined by the inner circumferential face of the cylindrical case is 150 cm² or more, and that the packing rate of the hollow fiber membranes constituting the hollow fiber membrane bundle at the position of the inner wall surface of the first sealing body is in a range of 40 to 70%.

The hollow fiber membrane module of the invention having a large amount of filtrating raw water a good filtration efficiency is provided based on the embodiment having the minimum lateral cross sectional area and the packing rate.

Increasing the minimum lateral cross sectional area of the module disclosed in the document cited in the above to gain more amount of filtrate (pure water) results in the increase of the suspended matter, and so the amount of the suspended matter deposited into the filtration chamber in the raw water supply ports formed as plural through-holes and in the spaces existing on the downstream side in the flow direction of the backwashing water correspondingly increases. Some even remain in the filtration chamber. As the result, those suspended matter return to the filtration chamber and are deposited on the surfaces of the hollow fiber membranes as raw water is re-supplied to the module; that causes the degrease of filtration efficiency.

However, in the invention, since the raw water supply port is formed on a lateral face of the cylindrical case separately from the drain port for the drain of backwashing, it can be ensured that the suspended matter is not deposited in the portions where the raw water passes. That means the invention is preferably performanced in the module having the minimum lateral cross sectional area of 150 cm², 200 cm², or even more.

Furthermore, the packing rate is set to be in the above range to achieve both high filtration efficiency and high filtration performance. If the module has the packing rate of less than 40%, it cannot achieve high filtration efficiency. If the module has the packing ratio of more than 70%, the suspended matter is easily caught in the hollow fibers bundle, and so it cannot achieve high filtration performance.

In the hollow fiber membrane module of the invention, it is preferable that the hollow fiber membrane bundle attached to the first sealing body and/or the second sealing body is kept apart from the inner wall surface of the cylindrical case by means of a spacer/spacers protruded from the inner wall surface of the cylindrical case.

It is preferable that the protruding height of the spacer (s) from the inner wall surface of the cylindrical case is in a range of 2 to 10 mm.

It is preferable that the face(s) of the spacer(s) on the sealing body side(s) is/are inclined in a direction leaving from the inner wall surface(s) of the sealing body/bodies toward the center of the cylindrical case.

Based on the embodiment having a spacer, a hollow fiber membrane module is provided in which breakage of hollow fiber membranes (the thread breakage) likely to be caused due to during transportation or during use of the hollow fiber membrane module is prevented and has a large volume.

In the hollow fiber membrane module of the invention, it is preferable that the crest of the first cap is provided with a cover that can be opened and closed to allow repair of a hollow fiber membrane in the hollow fiber membrane bundle attached to the first sealing body.

Based on the embodiment having a cover, a hollow fiber membrane module is provided in which it is possible to perform repair work of a hollow fiber membrane damaged due to, for example, fiber breakage with simply opening the cover and without removing the first cap from the cylindrical case or the joint connected to the filtrate delivery port.

In the hollow fiber membrane module of the invention, it is preferable that the second cap is provided with an air supply port having a reduced orifice and a check valve and opened toward the second chamber.

Based on the embodiment having a reduced orifice and a check valve, a hollow fiber membrane module is provided in which flowing of drain from the second chamber through the air supply port into the air supply pipe is prevented by the check valve, and in the case where many hollow fiber membrane modules are used in parallel connection for filtering a large amount of raw water, supplying volume of air to the respective hollow fiber membrane modules is kept in equal by the reduced orifice during aeration flushing.

In the hollow fiber membrane module of the invention, it is preferable that the cylindrical case is a blow-molded article or thermoformed article made of a thermoplastic resin.

A large hollow fiber membrane needs a large cylindrical case. Conventional cylindrical cases are formed by injection molding of a resin, but if a large cylindrical case is formed by means of injection molding, there is a problem that the resin layer formed becomes heterogeneous or contains voids. The hollow fiber membrane module provided in this mode of using a blow-molded article or thermoformed article as the cylindrical case solves this problem.

It is preferable that the thermoplastic resin is a polyvinyl chloride (PVC) resin.

Based on the embodiment having a cylindrical case made of the polyvinyl chloride resin, a hollow fiber membrane module having excellent in water resistance, acid resistance and alkali resistance, and free from toxicity, and in inexpensive is provided.

It is preferable that the polyvinyl chloride resin contains a non-lead compound as a thermal stabilizer.

It is practiced to let the polyvinyl chloride resin contain a thermal stabilizer, for achieving higher thermal stability. As the thermal stabilizer, a lead compound is often used. In the case where the cylindrical case is made of a polyvinyl chloride resin containing a lead compound, the lead compound may be dissolved into water while the hollow fiber membrane module is used. Based on the embodiment having a cylindrical case made of the polyvinyl chloride resin containing a non-lead compound as a thermal stabilizer, a hollow fiber membrane module having no such that problem is provided.

In the hollow fiber membrane module of the invention, it is preferable that the cylindrical case is made of an acrylonitrile-X-styrene copolymer (AXS) resin.

According to this embodiment, a hollow fiber membrane module is provided in which dissolving endocrine disruptors (environmental hormones) into drinking water even if it is used for producing drinking water or producing dioxins which is one kind of endocrine disruptors (environmental hormones) during incineration thereof are prevented.

It is preferable that the above X denotes ethylene propylene rubber or acrylic rubber.

According to this embodiment, a hollow fiber membrane module is provided in which producing endocrine disruptors (environmental hormones) is prevented in more effective.

In the hollow fiber membrane module of the invention, it is preferable that the resin used to form the first sealing body and/or the second sealing body is an epoxy resin having bisphenol represented by the following general formula 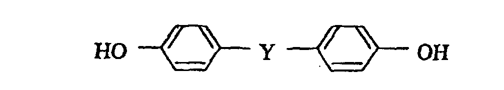 (where Y denotes an alkylene group).

According to this embodiment, a hollow fiber membrane module having effect on preventing production of endocrine disruptors (environmental hormones) is provided.

It is preferable that said Y is represented by 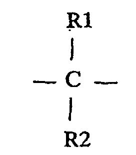 (where R1 and R2 denote, respectively independently, CₙH₂ₙ₊₁ (where n denotes 0 or an integer of 2 or more)).

According to this embodiment, a hollow fiber membrane module having more effect on preventing production of endocrine disruptors (environmental hormones) is provided.

It is preferable that the epoxy resin is a bisphenol F epoxy resin.

According to this embodiment, a hollow fiber membrane module having further more effect on preventing production of endocrine disruptors (environmental hormones) is provided.

It is preferable that the epoxy resin penetrates into pore spaces of the hollow fiber membrane by 1 vol% or more of the volume of the pore spaces. The pore spaces mean that spaces of pores formed in a membrane between the outer surface and the inner surface thereof to provide function of filtration therewith.

According to this embodiment, a hollow fiber membrane module is provided in which supporting hollow fiber membranes by the sealing bodies is ensured even if the hollow fiber membranes are shaken due to the fluid flow in the filtration chamber.

In the hollow fiber membrane module of the invention, it is preferable that the filtration chamber is of pressurization type in which it is pressurized at higher than the atmospheric pressure during filtration or backwashing.

According to this embodiment, a hollow fiber membrane module having a larger amount of water to be filtered and a high washing effect is provided.

The hollow fiber membrane module unit of the invention comprises a plurality of the hollow fiber membrane modules of the invention connected with each other, wherein the respective air discharge ports of the plurality of the hollow fiber membrane modules are connected with a common pipe that is located at a position lower than the respective air discharge ports.

The hollow fiber membrane module unit provided in this mode prevents such a phenomenon that the overflowing water entrained in air and discharged from the air discharge ports reciprocates between the air discharge pipe and the filtration chambers.

In the hollow fiber membrane module unit of the invention, it is preferable that the plural hollow fiber membrane modules are mounted in plural rows on a frame.

The hollow fiber membrane module unit of the invention provided in this mode allows a large amount of water to be filtered and can be compact.

In the hollow fiber membrane module unit of the invention, it is preferable that the plural hollow fiber membrane modules are positioned substantially symmetrically about a line or zigzag.

The hollow fiber membrane module unit provided in this mode allows a large amount of water to be filtered and can be compact while allowing easy piping work.

In the hollow fiber membrane module unit of the invention, it is preferable that the respective raw water supply ports of the plural hollow fiber membrane modules are connected with a common raw water pipe, and that the respective filtrate delivery ports are connected with a common filtrate delivery pipe.

The hollow fiber membrane module unit provided in this mode allows a large amount of water to be filtered and can be compact while allowing easy piping work.

In the hollow fiber membrane module unit of the invention, it is preferable that the pipes connected with the raw water supply ports, air discharge ports, filtrate delivery ports and drain ports have at least one loose joint.

The hollow fiber membrane module unit provided in this mode has a piping system easy connection to a piping and strong against vibration.

The method of producing a hollow fiber membrane module as said hollow fiber membrane module of the invention is characterized in that when said hollow fiber membrane bundle accommodated in said cylindrical case of 150 cm² or more in the minimum lateral cross sectional area defined by the inner wall surface of the cylindrical case is bonded and fastened at the ends thereof using a resin while said first sealing body is formed, respectively by means of stationary potting, the resin is cured with the curing reaction temperature of the resin at the central portion of the formed first sealing body controlled at 120°C or lower.

In the method of producing the hollow fiber membrane module of the invention, it is preferable that the viscosity of the resin at the start of said stationary potting is in a range of 100 to 5,000 mPa·s.

In the method of producing the hollow fiber membrane module of the invention, it is preferable that the resin is an epoxy resin having bisphenol represented by the following general formula 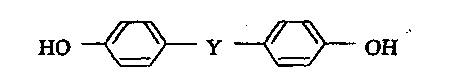 (where Y denotes an alkylene group).

In the method of producing the hollow fiber membrane module of the invention, it is preferable that said Y is represented by 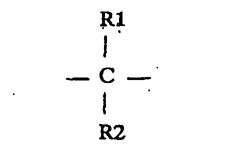 (where R1 and R2 denotes, respectively independently, CₙH₂ₙ₊₁ (where n denotes 0 or an integer of 2 or more)).

In the method of producing the hollow fiber membrane module of the invention, it is preferable that the resin is a bisphenol F epoxy resin.

### Brief Description of the Drawings

Fig. 1 is a vertical sectional view showing an embodiment of the hollow fiber membrane module of the invention.
Fig. 2 is a Z1-Z1 arrow sectional view of Fig. 1.
Fig. 3 is an expanded view of the Z2 portion of Fig. 1.
Fig. 4 is a typical perspective view of the hollow fiber membrane partially with a vertical sectional view for illustrating the filtration action that takes place in the hollow fiber membrane.
Fig. 5 is a perspective view showing an embodiment of the hollow fiber membrane module unit of the invention, in which the hollow fiber membrane module shown in Fig. 1 and identical other hollow fiber membrane modules are arranged in two rows.
Fig. 6 is a plan view showing a state in which the plural hollow fiber membrane modules shown in Fig. 5 are arranged in parallel.
Fig. 7 is a plan view showing a state in which the plural hollow fiber membrane modules shown in Fig. 5 are arranged zigzag.
Fig. 8 is a vertical sectional view showing an example of the joints used for coupling the pipes in the hollow fiber membrane module unit shown in Fig. 5.
Fig. 9 is a Z3-Z3 arrow view of Fig. 8.

### The Best Modes for Carrying Out the Invention

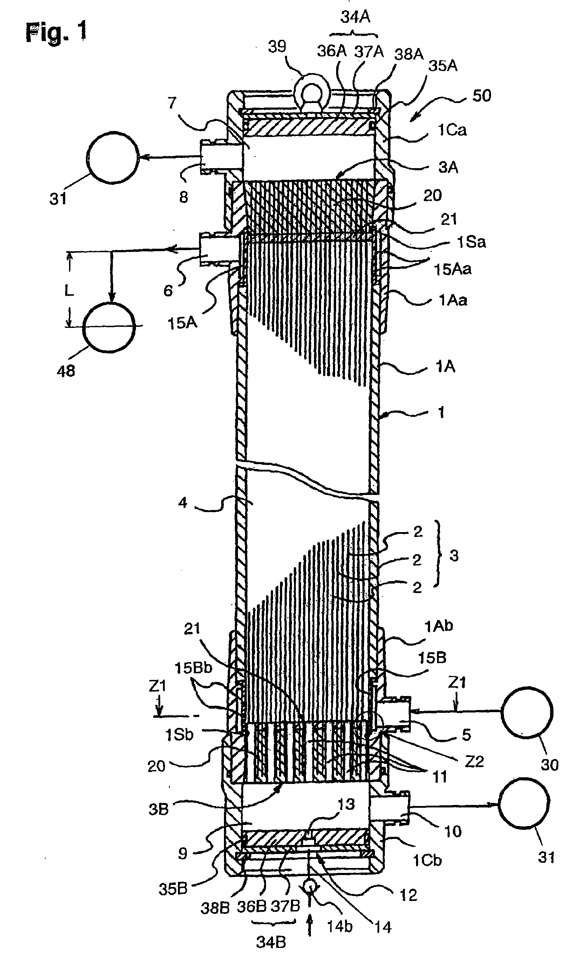

In Figs. 1 through 3, a hollow fiber membrane module 50 is composed of a cylindrical case 1, a first sealing body 3A provided for the cylindrical case 1 for sealing the opening at one end of the cylindrical case, a second sealing body 3B provided for the cylindrical case 1 for sealing the opening at the other end of the cylindrical case, a first cap 1Ca provided for the cylindrical case 1 outside the first sealing body 3A, and a second cap 1Cb provided for the cylindrical case 1 outside the second sealing body 3B.

The cylindrical case 1 consists of a long main case member 1A and sealing body attaching case members 1Aa and 1Ab respectively connected at both the ends of the main case member 1A.

In the hollow fiber membrane module 50, the inner wall surface of the first sealing body 3A, the inner wall surface of the second sealing body 3B and the inner wall surface of the cylindrical case 1 form a filtration chamber 4. The inner wall surface of the first cap 1Ca and the outer wall surface of the first sealing body 3A form a first chamber 7. The inner wall surface of the second cap 1Cb and the outer wall surface of the second sealing body 3B form a second chamber 9.

The hollow fiber membrane module 50 has a hollow fiber membrane bundle 3 accommodated in the filtration chamber 4. The hollow fiber membrane bundle 3 usually consists of hundreds to tens of thousands of hollow fiber membranes 2.

The hollow fiber membrane bundle 3 can be accommodated in the filtration chamber 4 by either of two methods. In one method, the numerous hollow fiber membranes 2 are arranged in one direction and accommodated straight. In the other method, numerous hollow fiber membranes are curved in U-shape on their ways and arranged in two directions for U-shaped accommodation. These accommodation methods are publicly known.

Fig. 1 shows a state in which the hollow fiber membrane bundle 3 is accommodated straight in the filtration chamber 4. However, in the hollow fiber membrane module of the invention, the hollow fiber membrane bundle 3 can also be accommodated in U-shape in the filtration chamber 4.

In the hollow fiber membrane module 50, one end of the hollow fiber membrane bundle 3 accommodated in the filtration chamber 4 is attached to the first sealing body 3A, and the hollow portions of the respective hollow fiber membranes 2 are opened toward the first chamber 7. In the case of U-shaped accommodation, both the ends of the hollow fiber membrane bundle 3 are attached to the first sealing body 3A and the hollow portions of the respective hollow fiber membranes 2 are opened toward the first chamber 7.

In the hollow fiber membrane module 50, the other end of the hollow fiber membrane bundle 3 accommodated in the filtration chamber 4 is attached to the second sealing body 3B, and the hollow portions of the respective hollow fiber membranes 2 are closed against the second chamber 9.

Attaching the end of the hollow fiber membrane bundle 3 to the first sealing body 3A can be carried out by a method of allowing a flowable resin to fill into the clearances between the respective hollow fiber membranes 2 at placing the side of the sealing body 3A to be formed at flat and to form the first sealing body 3A, and solidifying the resin.

As a result, the outer circumferential face of the first sealing body 3A composed of the solidified resin 20 is bonded to the inner wall surface of the cylindrical case 1, and the hollow fiber membrane bundle 3 is fastened to the first sealing body 3A in such a state that the clearances between the respective hollow fiber membranes 2 are filled with the resin 20. On the other hand, as a result, the fluid flow between the filtration chamber 4 and the first chamber 7 is perfectly inhibited.

The method of forming the sealing body 3A and fastening the hollow fiber membrane bundle 3 to the sealing body 3A is called potting and publicly known. In advance of the potting, the end portion of the hollow portion of each of the hollow fiber membranes is sealed by penetrating a resin into the hollow portion or crushing the hollow portion. After potting, where an opening of the hollow portion of each of the hollow fiber membranes at the outer surface of the sealing body is needed, a portion of the sealing body formed by the potting is cut out and removed to remove the hollow portion previously sealed.

The formation of the second sealing body 3B and the fastening of the other end of the hollow fiber membrane bundle 3 to the second sealing body 3B are similarly carried out by means of potting. However, the closure of the openings of the respective hollow fiber membranes 2 by the solidified resin is left as it is. As required, the outside end of the formed second sealing body 3B is cut off, but in this case, the cutting is carried out to ensure that the closure of the openings of the respective hollow fiber membranes 2 remains.

In the case where the hollow fiber membrane bundle is accommodated in U-shape in the filtration chamber 4, the hollow fiber membrane bundle 3 is not fastened to the sealing body 3B, and the sealing body 3B is simply formed by means of potting.

The hollow fiber membrane module 50 further has a raw water supply port 5 formed through the cylindrical case 1 and opened toward the filtration chamber 4 at a position near the second sealing body 3B, an air discharge port 6 formed through the cylindrical case 1 and opened toward the filtration chamber 4 at a position near the first sealing body 3A, and fluid flow holes 11 formed in the second sealing body 3B through the second sealing body 3B from the filtration chamber 4 to allow the flow of air and drain.

The air discharge port 6 is formed for allowing the discharge of the air in the filtration chamber 4 and the overflowing water entrained in air. In this embodiment, it also functions as the discharge port of the concentrate in the filtration chamber 4. The discharge port of the concentrate in the filtration chamber 4 may be separated from the air discharge port 6.

The fluid flow holes 11 are formed numerously in the second sealing body 3B. These fluid flow holes 11 are formed in the second sealing body 3B substantially in parallel to the respective hollow fiber membranes 2 fastened in the second sealing body 3B and to ensure that they do not interfere with each other. The fluid flow holes 11 are formed as air dispersing and drain holes. During aeration flushing, they function as air dispersing holes for allowing the blow of compressed air into the filtration chamber 4, and during raw water supply or backwashing, they function as drain holes for discharging the drain produced in the filtration chamber 4.

Furthermore, the hollow fiber membrane module 50 has a filtrate delivery port 8 formed through the first cap 1Ca and opened toward the first chamber 7 for delivering the filtrate (purified water), and a drain port 10 and an air supply port 12 formed through the second cap 1Cb and opened toward the second chamber 9.

The drain port 10 is formed to discharge the drain flowing into the second chamber 9 when the raw water is filtered or when the hollow fiber membrane module 50 is backwashed.

On the surface of the first sealing body 3A facing the filtration chamber 4, an elastic resin layer 21 made of an elastic resin is formed. The elastic resin layer 21 eases the stress concentrated at the bonding interface between the respective hollow fiber membranes 2 and the resin 20 forming the first sealing body 3A, and prevents that the hollow fiber membranes 2 are broken due to the generated stress.

On the inner circumferential face of the cylindrical case 1 (the sealing body attaching case member 1Ab) in the region provided with the raw water supply port 5, a current guide tube 15B having numerous dispersing holes 15Bb is provided to cover the entire surface in the inner circumferential direction. The raw water supplied to the raw water supply port 5 passes through the numerous dispersing holes 15Bb and supplied into the filtration chamber 4 substantially uniformly from the entire inner circumference of the cylindrical case 1.

Also on the inner circumferential surface of the cylindrical case 1 (the sealing body attaching case member 1Aa) in the region provided with the air discharge port 6, a current guide tube 15A having numerous dispersing holes 15Aa is similarly provided to cover the entire surface in the inner circumferential direction. The air remaining after aeration flushing and overflowing water accompanied by the air go out of the filtration chamber 4 through the numerous dispersing holes 15Aa substantially uniformly toward the entire inner circumference of the cylindrical case 1, being discharged from the air discharge port 6.

The crest of the first cap 1Ca has an opening. This opening is closed by a closing plate 34A inserted in the opening. The closing plate 34A consists of an inner sheet 36A made of a resin and an outer sheet 37A made of a metal such as stainless steel bonded to the inner sheet 36A. Between the outer circumferential face of the inner sheet 36A and the inner circumferential face of the first cap 1Ca, an O-ring 35A is fitted for sealing.

The closing plate 34A is installed in the opening of the first cap 1Ca by means of a split ring 38A detachably attached to the opening of the first cap 1Ca. If the split ring 38A is removed from the first cap 1Ca, the closing plate 34A can be removed from the first cap 1Ca. Since the closing plate 34A can be removed from and attached to the first cap 1Ca, the first chamber 7 can be accessed from the opening of the first cap 1Ca without removing the first cap 1Ca from the cylindrical case 1 if the closing plate 34A is removed.

In this constitution, if any of the hollow fiber membranes 2 is broken during the filtration treatment of raw water, the supply of raw water to the hollow fiber membrane module 50 is stopped, and if the closing plate 34A is removed, the end of the hollow fiber membrane bundle 3 is exposed. So, if the opening end of the broken hollow fiber membrane 2 is sealed with a resin or the like, the module can be simply repaired to prevent that the raw water is mixed with the filtrate. Since this repair work can be carried out in the installed state without removing the first cap 1Ca from the cylindrical case 1 and without removing the hollow fiber membrane module 50 from the base, the operation convenience of the filtration treatment apparatus can be improved.

The closing plate 34A has a lifting hook 39 attached. If this lifting hook 39 is used for lifting the hollow fiber membrane module 50 by means of a machine, the hollow fiber membrane module 50 can be easily transported.

At the crest of the second cap 1Cb, an air supply port 12 communicating to the second chamber is formed. The air supply port 12 is used for blowing compressed air for aeration flushing.

More particularly, the crest of the second cap 1Cb has an opening. The opening is closed by means of a closing plate 34B inserted in the opening. The closing plate 34B consists of an inner sheet 36B made of a resin and an outer sheet 37B made of a metal such as stainless steel bonded to the inner sheet 36B. Between the outer circumferential face of the inner sheet 36B and the inner circumferential face of the second cap 1Cb, an O-ring 35B is fitted for sealing. The air supply port 12 has a reduced orifice 13 formed at the tip.

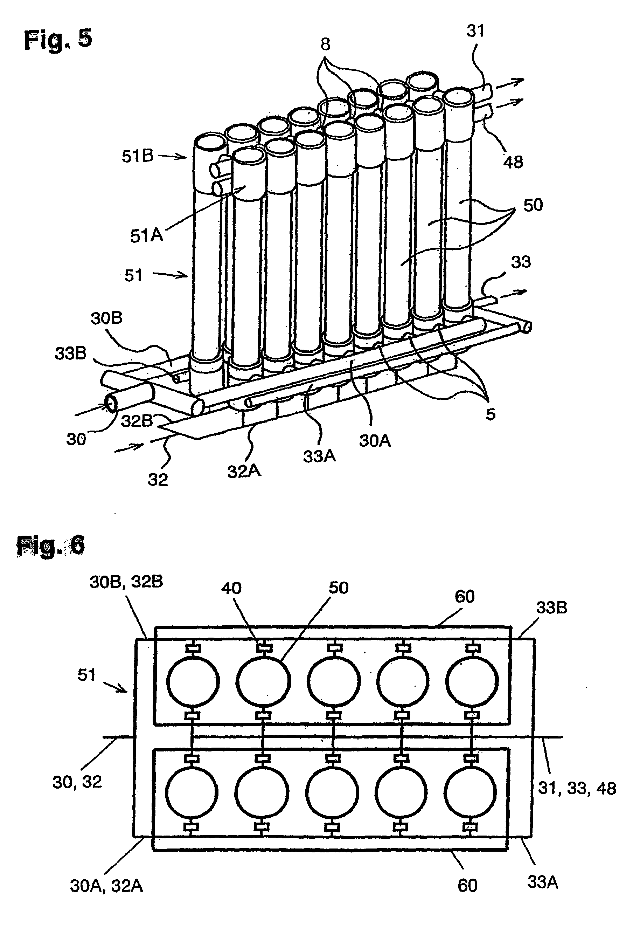

As described later in reference to Fig. 5, in the case where many hollow fiber membrane modules 50 are used in parallel connection for filtering a large amount of raw water, the reduced orifice 13 of the respective modules act to uniformly distribute the air to the respective plural modules 50 during aeration flushing. The inner diameter of the reduced orifice 13 is only required to be such that the pressure loss caused by the reduced orifice becomes higher than the pressure loss in the pipe. For example, it is preferable that the pressure loss is higher by about 5 kPa or more, especially by about 10 to 30 kPa.

The closing plate 34B is installed in the opening of the second cap 1Cb by means of a split ring 38B detachably fastened to the opening of the second cap 1Cb. If the split ring 38B is removed from the second cap 1Cb, the closing plate 34B can be removed from the second cap 1Cb.

Since the closing plate 34B can be removed from and attached to the second cap 1Cb, the second chamber 9 can be accessed from the opening of the second cap 1Cb without removing the second cap 1Cb from the cylindrical case 1 if the closing plate 34B is removed. As a result, the repair work in the second chamber 9 can be carried out with the hollow fiber membrane module 50 kept installed on the base without removing the second cap 1Cb from the cylindrical case 1, and the operation convenience of the filtration treatment apparatus can be improved.

To the air supply port 12, an air supply pipe 14 is connected, and the air supply pipe 14 is provided with a check valve 14b. The check valve 14b acts to allow the flow in the air supply direction only, and to prevent the backflow of drain from the second chamber 9 to the air supply port 12.

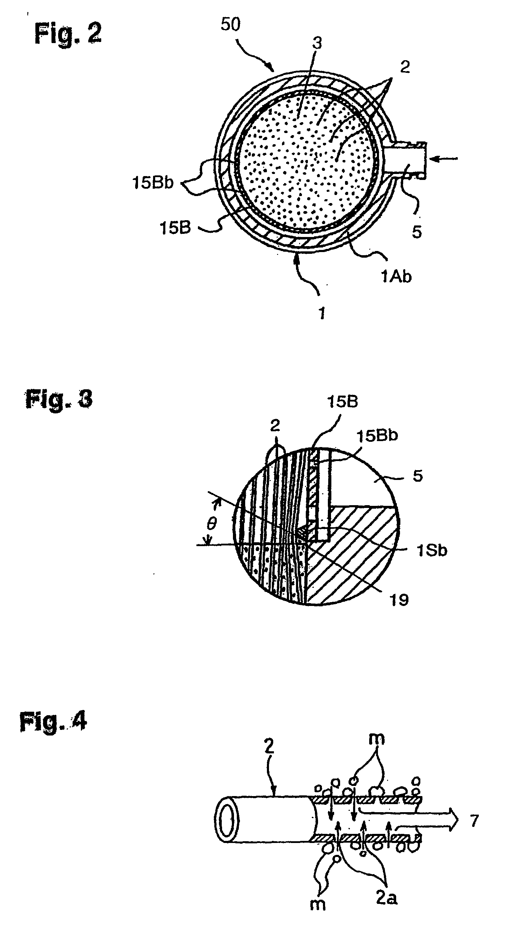

The filtration treatment of raw water using the hollow fiber membrane module 50 can be carried out if the raw water is supplied under pressurization from the raw water supply port 5 to the filtration chamber 4. The raw water supplied to the filtration chamber 4 is destined to penetrate the filtration holes 2a having a very small diameter (about 0.01 to 1 im) numerously existing in the surfaces of the hollow fiber membranes as shown in Fig. 4. In this case, the suspended matter m in the raw water is caught on the hollow fiber membranes 2, and the water permeating the hollow fiber membranes 2 to reach the hollow portions becomes the filtrate (purified water).

The filtrate obtained in the numerous hollow fiber membranes 2 flows from the openings of the respective hollow fiber membranes 2 positioned at the surface of the first sealing body into the first chamber (filtrate delivery chamber) 7. Then, it goes through the filtrate delivery port 8 formed through the first chamber 7 and sent out of the hollow fiber membrane module 50.

If the filtration treatment of raw water is continued for a long time, the suspended matter m is accumulated on the surfaces of the hollow fiber membranes 2, to lower the filtration function of the hollow fiber membrane module 50. So, somewhere in the operation of raw water filtration treatment, backwashing and aeration flushing are carried out at certain intervals. This action removes the suspended matter m from the surfaces of the hollow fiber membranes 2, and the filtration function of the hollow fiber membrane module 50 can be restored.

For backwashing, the raw water supply port 5 and the air discharge port 6 are closed, and purified water is supplied under pressurization from the filtrate outlet 8 into the hollow portions of the hollow fiber membranes 2, and passed through the filtration holes 2a of the respective hollow fiber membranes 2 from inside to outside, to remove the suspended matter m on the surfaces of the hollow fiber membranes 2 and to discharge it from the drain port 10 through the through-holes 11.

For aeration flushing, before and after backwashing, with the raw water supply port closed and the air discharge port 6 opened, compressed air is blown from the air supply port 12 through the through-holes (plural air dispersing and drain holes) 11 into the filtration chamber 4, for discharging the air from the air discharge port 6, while the respective hollow fiber membranes 2 of the hollow fiber membrane bundle 3 are shaken to remove the suspended matter m on the surfaces of the membranes for discharging the suspended matter together with backwashing water from the drain port 10.

In the hollow fiber membrane module 50 of the invention, since the raw water supply port 5 is formed on a lateral face of the cylindrical case 1 containing the filtration chamber 4, the drain port 10 of backwashing water is separate from the raw water supply port 5. In this constitution, even if the drain containing the suspended matter m remains in the second chamber 9, it is prevented that the drain is mixed with raw water when raw water is supplied again after completion of backwashing, and the filtration function of the hollow fiber membrane module 50 can be stably maintained.

Even if the suspended matter m is accumulated in the through-holes 11 having a small diameter during backwashing, compressed air passes through the through-holes 11 functioning as air dispersing and drain holes, into the filtration chamber 4 during aeration flushing, when the suspended matter m is also once blown into the filtration chamber 4, but since the suspended matter is discharged from the air discharge port 6 together with the mixture of air and water, it does not remain in the filtration chamber 4. So, when the raw water is again filtered, it does not happen that the filtration function of the hollow fiber membrane module 50 is inhibited.

The material of the hollow fiber membranes 2 can be any of conventional polymers publicly known for hollow fiber membranes such as polyacrylonitrile, polysulfone and polyvinylidene fluoride. Among them, membranes made of polyacrylonitrile or polyvinylidene fluoride having micropores having a size of not more than 1 im, especially in a range of 0.005 to 0.5 im on the membrane surfaces are preferable. The hollow fiber membranes 2 satisfying these conditions can efficiently remove fine particles and suspended matter and exhibit also high performance in inhibiting microbes and viruses.

As the resin used to form the first sealing body 3A or the second sealing body 3B, an epoxy resin having a low viscosity is preferable. Particularly an epoxy resin having a viscosity of 100 to 5,000 mPa · s at room temperature and a curing time (time taken for the polymer to be crosslinked) of within 48 hours at room temperature is desirable. If such an epoxy resin is used, even stationary potting allows the resin to be packed uniformly without forming voids in the portions of bonding and fastening the hollow fiber membrane bundle 3. Of course, for the hollow fiber membrane module 50 of the invention, the sealing bodies can also be formed by means of centrifugal potting.

It is preferable that the resin used to form the elastic resin layer 21 is a silicone. Especially a two-part curable silicone composed of a main ingredient and a curing agent is preferable. As a curing catalyst, titanium-based or platinum-based (heating is necessary) catalyst can be used, and a curing catalyst having a viscosity of 100 to 5,000 mPa · s at room temperature and a curing time of 1 to 48 hours can be preferably used.

In the hollow fiber membrane module 50 of the invention, the packing rate of the hollow fiber membranes 2 is preferable in the range of 40 to 70%. If the packing rate is less than 40%, sufficient filtration treatment efficiency cannot be obtained. If the packing rate is more than 70%, the clearances between the respective hollow fiber membranes are so close that the suspended matter is likely to be collected between the respective hollow fiber membranes, to lower filterability. The packing rate is defined as a rate of the total area of the contour areas in the cross sections of the hollow fiber membranes 2 to the cross sectional area defined by the inner circumferential face of the cylindrical case 1.

In the hollow fiber membrane module 50 of the invention, in the case where the packing rate of the hollow fiber membranes 2 is in a range of 40 to 70%, it is preferable that the minimum lateral cross sectional area defined by the inner circumferential face of the cylindrical case 1 is 150 cm² or more. In this case, a hollow fiber membrane module 50 allowing a large amount of water to be filtered and having good filtration efficiency can be obtained.

In the hollow fiber membrane module 50 of the invention, it is preferable that a spacer 1Sa protruding from the inner circumferential face of the sealing body attaching case member 1Aa on the first sealing body 3A side is provided in contact with or near the circumferential line drawn at the intersection between the plane containing the wall surface (inner wall surface) of the first sealing body 3A on the filtration chamber 4 side and the inner circumferential face of the sealing body attaching case member 1Aa.

Similarly, it is preferable that a spacer 1Sb protruding from the inner circumferential face of the sealing body attaching case member 1Ab on the second sealing body 3B side is provided in contact with or near the circumferential line drawn at the intersection between the plane containing the wall surface (inner wall surface) of the second sealing body 3B on the filtration chamber 4 side and the inner circumferential face of the sealing body attaching case member 1Ab.

The spacers 1Sa and 1Sb keep the hollow fiber membranes 2 positioned in the outer circumference of the hollow fiber membrane bundle 3 apart from the inner circumferential faces of the sealing body attaching case members 1A1 and 1Ab, and form a clearance there as a portion 19 (Fig. 3) where the resin 20 is collected.

The resin 20 contained by means of potting begins to be cured from the central portion, and the curing progresses with shrinking toward the outer circumference. The resin for covering the shortage due to shrinkage is supplied from the resin-collecting portion 19. This supply occurs since the resin positioned in the collecting portion 19 is not yet cured and can flow.

Even in the case where the spacers 1Sa and 1Sb do not exist, hence where the collecting portion 19 does not exit, in order to cover the shortage of the resin in the central portion due to shrinkage, the resin in the outer circumferential portion destined to be cured last migrates toward the central portion. However, numerous hollow fiber membranes 2 exist in the outer circumferential portion, and the flow resistances of the resin in the clearances between the respective hollow fiber membranes 2 are not constant. So, it can happen that the liquid level of the resin declines unevenly and that voids devoid of the resin are formed.

This problem can be solved by the existence of the collecting portion 19 formed by means of the spacers 1Sa and 1Sb. Since the collecting portion 19 acts to uniform the clearance between the internal circumferential faces of the sealing body attaching case members 1Aa and 1Ab and the hollow fiber membranes positioned in the outer circumference of the hollow fiber membrane bundle 3, the liquid level drop of the resin caused by shrinkage becomes uniform, and the formation of voids can also be prevented.

In the case where the volume of the hollow fiber membrane module 50 is large, the installation of the spacers 1Sa and 1Sb is advantageous for solving the above problem and for forming a hollow fiber membrane module 50 free from internal defects. The hollow fiber membrane module 50 free from internal defects causes few hollow fiber membranes 2 to be broken and has a long life.

For example, in the case where a hollow fiber membrane module having a volume of 8 inches (200 mm) or more in outer diameter is formed, the amount of the resin used for potting is large since the volume is large. If the amount of the resin is large, the shrinkage of the resin is large in proportion to the amount of the resin, and the amount of the migrating resin is also large. So, internal defects are likely to be caused.

The spacers 1Sa and 1Sb have effect of preventing occurrence of a straggled fiber, since the spacers restrain the periphery of the hollow fiber membrane bundle 3. Though the straggled fiber is apt to break under receiving concentration of stress, difficulty caused by the breakage is prevented by the prevention of occurrence of the straggled fiber.

It is preferable that the form of the spacers 1Sa and 1Sb is generally smooth, for example, a semi-circle or a triangle having smooth angles in cross sectional form, since air is not caught when the resin is supplied. It is preferable that the bottom faces of the spacers 1Sa and 1Sb have an angle è (Fig. 3) upward from the horizontal plane toward the center of the cylindrical case 1. That is, it is preferable that the angle è is larger than 0 degree. A more preferable range is 5 to 45 degrees.

For the convenience of inserting the hollow fiber membrane bundle 3 into the cylindrical case 1, it is preferable that the height of the spacers 1Sa and 1Sb from the inner circumferential faces of the sealing body attaching case members 1Aa and 1Ab is in a range of 2 to 10 mm. A more preferable range is 3 to 5 mm.

The hollow fiber membrane module 50 of the invention can be used singly to form a filter. The filter is assembled by connecting a raw water supply pipe to the raw water supply port 5 of the hollow fiber membrane module 50, an air discharge pipe to the air discharge port 6, a filtrate delivery pipe to the filtrate delivery port 8, a drain pipe to the drain port 10, and an air supply pipe to the air supply port respectively.

On the other hand, as shown in Fig. 5, the hollow fiber membrane module 50 of the invention can be used together with other identical hollow fiber membrane modules 50, to form a filter that allows a large amount of water to be filtered. The hollow fiber membrane module unit of the invention consists of a plurality of the hollow fiber membrane modules 50 connected with each other.

Fig. 5 shows the hollow fiber membrane module unit 51 of the invention. In Fig. 5, the hollow fiber membrane module unit 51 has a module row 51A consisting of eight hollow fiber membrane modules 50 aligned and a module row 51B also consisting of eight hollow fiber membranes 50 aligned.

The raw water supply ports of the respective hollow fiber membrane modules 50 of the module row 51A are connected with one raw water supply pipe 30A installed outside the module row 51A, and the raw water supply ports 5 of the respective hollow fiber membrane modules 50 of the module row 51B are connected with one raw water supply pipe 30B installed outside the module row 51B. The raw water supply pipes 30A and 30B are respectively connected with a main raw water supply pipe 30 installed upstream. In this constitution, raw water is supplied simultaneously to the raw water supply ports 5 of the respective hollow fiber membrane modules 50 of both the rows.

Between the module row 51A and the module row 51B, one main filtrate delivery pipe 31 is installed and connected with the filtrate delivery ports 8 of the respective hollow fiber membrane modules 50 of both the rows. In this constitution, the filtrate (purified water) is delivered from the filtrate delivery ports 8 of the respective hollow fiber membrane modules of both the rows.

The air supply ports 12 of the respective hollow fiber membrane modules 50 of the module row 51A are connected with one air supply pipe 32A installed below the module row 51A, and the air supply ports 12 of the respective hollow fiber membrane modules 50 of the module row 51B are connected with one air supply pipe 32B installed below the module row 51B. The air supply pipes 31A and 32B are respectively connected with a main air supply pipe 32 installed upstream. In this constitution, compressed air is supplied simultaneously to the air supply ports 12 of the respective hollow fiber membrane modules 50 of both the rows.

The drain ports 10 of the respective hollow fiber membrane modules 50 of the module row 51A are connected with one drain pipe 33A installed outside the module row 51A, and the drain ports 10 of the respective hollow fiber membrane modules 50 of the module row 51B are connected with one drain pipe 33B installed outside the module row 51B. The drain pipes 33A and 33B are connected respectively with a main drain pipe 33 installed downstream. In this constitution, drain is discharged simultaneously from the drain ports 10 of the respective hollow fiber membrane modules 50 of both the rows.

Between the module row 51A and the module row 51B, one air and overflowing water discharge pipe 48 is installed and is connected with the air discharge ports 6 of the respective hollow fiber membrane modules 50 of both the rows. In this constitution, air and overflowing water are simultaneously discharged from the air discharge ports 6 of the respective hollow fiber membrane modules 50 of both the rows.

The hollow fiber membrane module unit 51 of the present invention shown in Fig. 5 is characterized in that there is a difference between the height (the location in the vertical direction) of the air discharge ports 6 of the respective hollow fiber membrane modules 50 and the height (the location in the vertical direction) of the main air and overflowing water discharge pipe connected with the air discharge ports 6. This difference L is shown in Fig. 1. The main air and overflowing water discharge pipe 48 is located at a position lower than the air discharge ports 6. The difference in height can be formed, for example, if the air discharge ports 6 and the main air and overflowing water discharge pipe 48 are connected by means of elbow pipes.

If the main air and overflowing water discharge pipe 48 is located at a position lower than the air discharge ports 6, the overflowing water entrained in the air discharged intermittently from the air discharge ports 6 during aeration flushing drops from the air discharge ports 6 into the main air and overflowing water discharge pipe 48. This constitution disconnects the continuous flow of overflowing water. As a result, it is prevented that the overflowing water from flowing back to the hollow fiber membrane modules 50.

In the case where the main air and overflowing water discharge pipe 48 is not located as a position lower than the air discharge ports 6, reciprocating flow (reciprocating respiratory flow) of overflowing water occurs between the filtration chambers 4 and the main air and overflowing water discharge pipe 48 through the air discharge ports 6. If this reciprocating flow occurs, the hollow fiber membranes 2 positioned near the air discharge ports 6 are involved in the reciprocating flow. Bending actions work on the hollow fiber membranes repetitively, and especially repetitive stress concentration acts on the bonding interfaces between the hollow fiber membranes 2 and the first sealing bodies 3A. It is observed phenomenon of breakage of the hollow fiber membrane module 2 (fiber breakage). This problem can be solved if the main air and overflowing water discharge pipe 48 is located at a position lower than the air discharge ports 6.

Fig. 6 is a plan view of the hollow fiber membrane module unite 51 shown in Fig. 5. Fig. 6 shows a state in which five hollow fiber membrane modules 50 are arranged per row.

In Fig. 6, the hollow fiber membrane modules 50 are mounted on a frame 60 of a rigid structure, and the two rows are arranged to face each other. If the hollow fiber membrane modules 50 are arranged in two rows to face each other, many hollow fiber membrane modules 50 can be arranged at a high density. If the pipes 30, 31, 32, 33 and 48 connected with the respective hollow fiber membrane modules 50 are installed in the arrangement direction in the clearance between the rows and/or outside the rows, a compact hollow fiber membrane module unit 51 can be constructed.

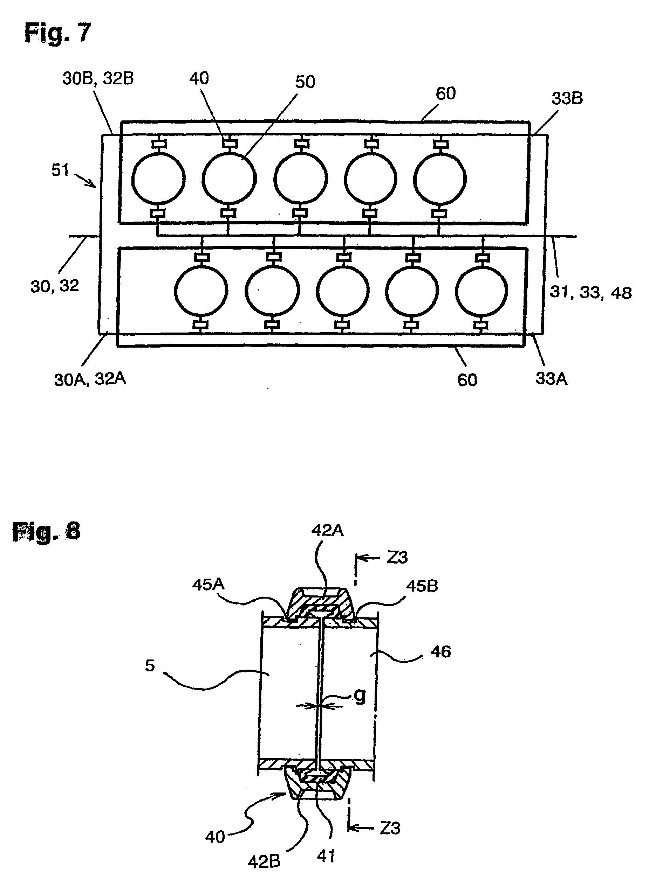

As for the pattern in which the hollow fiber membrane modules 50 are arranged, a pattern in which they are arranged symmetrically about a line as shown in Fig. 6, and a pattern in which they are arranged zigzag as shown in Fig. 7 are preferable. If these arrangement patterns are used, the piping work cost for the hollow fiber membrane module 51 can be reduced. In the case of zigzag arrangement, the working efficiency in the connection between the respective hollow fiber membrane modules 50 and the pipes 30, 31, 32, 33 and 48 can be improved.

The raw water supply ports 5, air discharge ports 6, filtrate delivery ports 8 and drain ports 10 of the hollow fiber membrane modules 50 are connected with respective pipes through joints. The joints are not especially limited, but such loose joint shown in Fig. 8 is preferable.

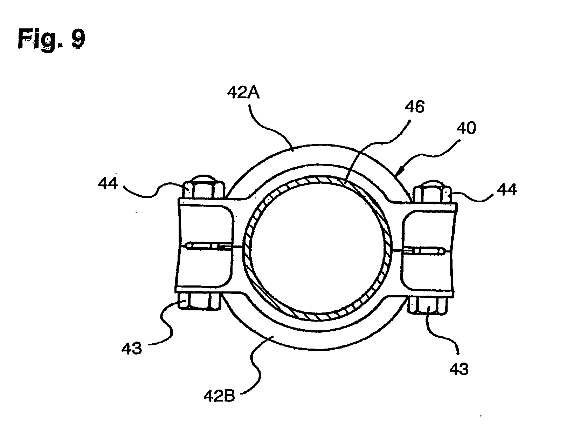

Fig. 8 is a vertical sectional view showing an example of the loose joint, and Fig. 9 is a cross sectional view of the loose joint shown in Fig. 8. In Figs. 8 and 9, the loose joint 40 is composed of an elastic ring 41 made of rubber or elastic resin, a pair of split housing halves 42A and 42B, and bolts 43 and nuts 44 for joining the housing halves 42A and 42B.

For connecting the raw water supply port 5 with the coupling port 46 of the raw water supply pipe 30A, their ends are butted with a clearance g kept between them, and the elastic ring 41 covers the outer circumference of the clearance g. Furthermore, the elastic ring 41 is covered with the pair of housing halves 42A and 42B, and the edges of the housing halves 42A and 42B are engaged with the grooves 45A and 45B respectively formed in the raw water supply port 5 and the coupling port 46. Then, the housing halves 42A and 42B are fastened by means of bolts 43 and nuts 44 tightened together.

By using loose joint 40, the two ports 5 and 46 are connected loosely with the clearance g kept between them, and the expansion, contraction and deflection of the pipe can be structurally absorbed through the elastic ring 41. As a result, even if the two ports move from each other in some misalignment, the pipeline can be kept airtight.

It is preferable that the cylindrical case 1 of the hollow fiber membrane module 50 of the invention is a blow-molded article or thermoformed article made of a thermoplastic resin.

In general, the resin case for accommodating a hollow fiber membrane is produced by means of injection molding that allows easy mass production. On the other hand, if it is attempted to increase the volume of the case for producing a larger hollow fiber membrane module, it becomes necessary to increase the wall thickness of the case in view of strength. If a case with a large wall thickness is produced by means of injection molding, the resin flow during molding is likely to be uneven, and because of this unevenness, such problems that the molded resin forms a multi-layer and that many voids are formed in the molded resin occur. These problems can be solved if the case is produced by means of blow molding or thermoforming using a thermoplastic resin.

Blow molding refers to a method comprising the steps of extruding a thermoplastic resin from an extruder like a tube (the extruded tube is called parison), holding the tube by means of a mold while the tube is still soft, and blowing air into the tube for inflating it into a cylindrical hollow article (cylindrical case). Thermoforming refers to a method comprising the steps of heating a pipe made of a thermoplastic resin for softening it, and applying an external force for shaping (secondary processing) to form a cylindrical hollow article (cylindrical case). The external force can be applied by means of free blow forming, vacuum forming, air pressure forming or press forming.

It is not necessary to produce all the case members of the cylindrical case 1 by means of blow molding or thermoforming using a thermoplastic resin. It is only required to produce at least the case member having the largest outer shell cross sectional area by means of blow molding or thermoforming using a thermoplastic resin. It is preferable to produce case members having an outer shell cross sectional area of 150 cm² or more by means of blow molding or thermoforming using a thermoplastic resin.

Examples of the thermoplastic resin used for forming the cylindrical case 1 include a polyvinyl chloride (PVC) resin, acrylic resin, polystyrene resin, acrylonitrile-butadiene rubber-styrene copolymer (ABS) resin, acylonitrile-ethylene propylene rubber-styrene copolymer (AES) resin, acrylonitrile-acrylic rubber-styrene copolymer (AAS) resin, polyethylene resin, polypropylene resin, and polycarbonate (PC) resin.

Among them, especially an AES resin and AAS resin respectively excellent in weather resistance, and a polyvinyl chloride resin excellent in water resistance and acid resistance and inexpensive are preferable.

Since a polyvinyl chloride resin is poor in thermal stability, a thermal stabilizer is generally added as an additive. As the thermal stabilizer, a lead compound is often used. However, in the case where the hollow fiber membrane module 50 is used for tap water, the lead content must be 0.005 mg/liter or less according to the Japan Water Work Association Standard.

Therefore, in the case where the cylindrical case 1 is produced using a polyvinyl chloride resin, it is preferable to use a non-lead compound such as a tin compound, zinc compound, calcium compound, magnesium compound or barium compound as the thermal stabilizer. Among them, a tin compound is especially preferable.

As the tin compound, any of dialkyltin dilaurates, dialkyltin maleates and dialkyltin mercaptides is preferable. As the zinc compound, zinc stearate is preferable. As the calcium compound, calcium stearate is preferable. As the magnesium compound, magnesium stearate is preferable. As the barium compound, barium stearate is preferable.

On the other hand, if a polyvinyl chloride (PVC) resin is incinerated, dioxins as endocrine disruptors (environmental hormones) are produced. So, in the case where the used cylindrical case 1 is disposed as waste, care must be exercised. A polycarbonate (PC) resin is produced from bisphenol A that is an endocrine disruptor. In the case where the filtrate is used as drinking water, care must exercised about the material of the cylindrical case 1 of the hollow fiber membrane module 50 used for producing the filtrate.

An acrylonitrile-butadiene rubber-styrene copolymer (ABS) resin has low weather resistance since the crosslinking of butadiene is deteriorated. So, if it is used for the cylindrical case 1 of the hollow fiber membrane module 50 used outdoors, it must be coated with a weather-resistant coating material.

These problems can be solved if at least one case member of the cylindrical case 1 is produced using an acrylonitrile-X-styrene copolymer (AXS) resin.

An acrylonitrile-ethylene propylene rubber-styrene copolymer (AES) resin having ethylene propylene rubber as X or acrylonitrile-acrylic rubber-styrene copolymer (AAS) resin having acrylic rubber as X is preferable.

In the conventional filters for producing tap water using sand filtration, hollow fiber membrane modules began to be used instead of sand filtration.

Japanese Patent No. 3070997 proposes to use a bisphenol A epoxy resin containing an aromatic amine excellent in strength and heat resistance, as the resin used for forming the sealing bodies of a hollow fiber membrane module.

However, if the bisphenol A epoxy resin is used to form large sealing bodies, the amount of the resin is large and for this reason, the reaction temperature becomes high. As a result, such problems occur, that the formed sealing bodies are cracked and that the formed sealing bodies shrink to destroy the bonding between the sealing bodies and the cylindrical case.

On the other hand, the raw materials of this bisphenol A epoxy resin include bisphenol A. If the polymerization reaction takes place perfectly without leaving any monomer, there is no problem. However, if unreactive bisphenol A exists, it may be dissolved out later. It is suggested that bisphenol A is an exogenous endocrine disrupting chemical substance (environmental hormone).

These problems can be solved, if the first sealing body 3A and/or the second sealing body 3B of the hollow fiber membrane module 50 of the invention is produced using an epoxy resin having bisphenol represented by the following general formula 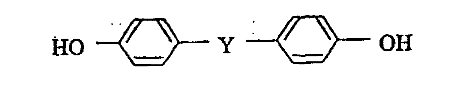 (where Y denotes an alkylene group).

It is preferable that said Y in the epoxy resin having bisphenol is represented by 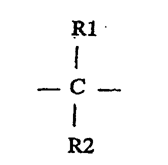 (where R1 end R2 denote, respectively independently, CₙH₂ₙ₊₁ (where n denotes 0 or an integer of 2 or more)).

Among them, a bisphenol F epoxy resin (n = 0) is especially preferable.

In the production of a hollow fiber membrane module 50 having a large volume, if the resin used to form the sealing bodies has a high viscosity, the resin is unlikely to penetrate into the clearances between the respective hollow fiber membranes 2, and the amount of the resin required becomes large. So, the reaction temperature during forming becomes high, and the formed sealing bodies are likely to be cracked. Furthermore, the bonding between the formed sealing bodies and the cylindrical case is likely to be destroyed.

From this point of view, a bisphenol F epoxy resin can be preferably used for producing a hollow fiber membrane module 50 having a large volume, since it is lower in viscosity than a bisphenol A epoxy resin (n = 1). The bisphenol F epoxy resin is not an environmental hormone substance.

As the curing gent of the resin used to form the sealing bodies, for example, an aliphatic amine, aromatic amine, organic acid anhydride compound or modified amine can be used. Among them, an aliphatic polyamine is especially preferable. To retard the progression of the reaction, a reaction retarder can also be added.

The viscosity of the resin used to form the sealing bodies should be such a level that reliably allows the resin to be injected into the molding regions of the sealing bodies and that allows the resin to penetrate into pore spaces. The pore spaces mean that spaces of pores formed in a membrane between the outer surface and the inner surface thereof to provide function of filtration therewith. A volume of filtrated water or a performance of filtration is determined by a size of the pore and a distribution of the pores. A strong adhesive force is obtained by a penetration of the potting resin into the pore spaces in the membrane which brings anchor effect. Where a volume of the resin penetrated is too large, the resin comes to the hollow portion through the membrane. It prevents flowing of filtrated water and lowers performance of filtration of a module. On the other hand, where the penetration of resin does not occur, an obtained adhesive force between the membrane and the sealing body becomes low and separation between the membrane and the resin will occur in certain circumstances.

The preferable amount of the resin that penetrates into the pore spaces is 1 vol% or more based on the volume of the pore spaces. A more preferable range is 30 to 100 vol%.

The optimum viscosity of the resin depends on the potting method. In stationary potting, since the resin is unlikely to penetrate into the clearances between the respective hollow fiber membranes, a resin having a lower viscosity is preferable. In centrifugal potting, since centrifugal force acts on the resin due to rotation, the resin penetrates into the clearances between the respective hollow fiber membranes even if the resin has a high viscosity.

A preferable viscosity range is 100 to 10,000 mPa·s, and a more preferable range is 100 to 5,000 mPa·s.

For keeping the viscosity in this range, and for controlling the reactivity to keep the shrinkage stress small, thereby preventing the cracking of the hardened bodies and the separation of them from the case, hence enhancing the strength, it is preferable that the resin contains a filler.

The filler is a material that does not chemically contribute to the epoxy curing reaction, and for example, silica, calcium carbonate or glass fibers can be used. Among them, silica can be especially preferably used. It is preferable that the amount of the filler added is 1 wt% or more based on the weight of the resin. An especially preferable range is 1 to 50 wt%.

In stationary potting, a preferable example of the epoxy resin is R8 (main ingredient) and H8 (curing agent) of LST868 produced by Vantico. R8 contains a bisphenol F epoxy resin as a main component and about 44% of a filler and has a viscosity of about 22,000 mPa·s (25°C) and a specific gravity of about 1.53 (25°C). H8 is mainly composed of an aliphatic polyamine and has a viscosity of about 180 mPa·s (25°C) and a specific gravity of about 0.99 (25°C).

It is preferable that the time required for curing the resin (curing time) is within 48 hours.

It is preferable that the strength of the hardened resin is 3 to 6 MPa as tensile strength, 40 to 50 MPa as compressive strength and 10 to 15 MPa as bending strength.

The strength of the resin with numerous hollow fiber membranes potted depends on the packing density of the hollow fiber membranes. At a packing rate of about 50%, it is preferable that the tensile strength is 2 to 5 MPa, that the compressive strength is 10 to 20 MPa and that the bending strength is 8 to 10 MPa.

### Example 1

A cylindrical case 1 (inner diameter: 194 mm, outer diameter: 216 mm) made of a polyvinyl chloride resin had 12,000 hollow fiber membranes 2 (outer diameter: 1.3 mm, inner diameter: 0.9 mm) made of a polyacrylonitrile resin inserted in it.

Thirty five parts by weight of an aliphatic polyamine based curing agent (LST868 H8 produced by Vantico K.K.) were mixed with 100 parts by weight of a bisphenol F type epoxy resin (LST 868 R8), and the mixture was stirred at 25° C and defoamed using a vacuum dryer, to prepare a resin to be used for forming a first sealing body 3A and a second sealing body 3B. The prepared resin was injected at 20 g/min using a tube pump, for potting, to produce a hollow fiber membrane module 50.

The sealing bodies 3A and 3B were cut in the radial direction using a tip saw type rotary blade. The cut faces were free from any crack, and the sealing bodies 3A and 3B had not been separated from the case 1.

### Comparative Example 1

A hollow fiber membrane module was produced by means of potting as described for Example 1, except that an urethane resin (consisting of 54 parts by weight of Coronate 4403 as a main ingredient and 46 parts by weight of KN213 as a curing agent (produced by Nippon Polyurethane Industry Co., Ltd.)) was used as the resin for forming the sealing bodies.

The sealing bodies were cut in the radial direction using a tip saw type rotary blade. On the cut faces, large cracks had been formed in the central portions.

### Comparative Example 2

A hollow fiber membrane module was produced by means of potting as described for Example 1, except that a resin consisting of 100 parts by weight of a bisphenol A epoxy resin (Araldite AW106 produced by Nagase Ciba K.K.) and 60 parts by weight of a polyamidoamine based curing agent (Araldite HV953U) was used as the resin for forming the sealing bodies.

The sealing bodies were cut in the radial direction using a tip saw type rotary blade. On the cut faces, large cracks had been formed in the central portions.

### Example 2

A cylindrical case 1 (inner diameter: 194 mm, outer diameter: 216 mm: inside minimum lateral cross sectional area 238 cm²) made of a polyvinyl chloride resin had 12,000 hollow fiber membranes 2 (outer diameter: 1.3 mm, inner diameter: 0.9 mm) made of a polyacrylonitrile resin inserted in it. The potting resin prepared as described below was injected at 20 g/min using a tube pump, and a hollow fiber membrane module 50 was produced by means of stationary potting. The effective membrane area based on the outer diameter of the hollow fiber membrane 2 at the filtration chamber 4 except at the first sealing body 3A and the second sealing body 3B was 150 cm², and the packing rate of the hollow fiber membrane 2 was 54%.

### [Preparation of potting resin]

| | |
|---|---|
| Bisphenol F epoxy resin (LST868 R8 produced by Vantico K.K.) | 100 parts by weight |
| Aliphatic polyamine based curing agent (LST868 H8 produced by Vantico K.K.) | 35 parts by weight |
| Viscosity of the resin obtained by mixing and stirring these ingredients at 25°C and defoaming using a vacuum dryer | 1,300 mPa·s |

A temperature sensor was inserted into the center of the injected resin, and the heating temperature of the resin during potting was measured and found to be 94° at the highest.

After curing of the resin, the sealing bodies 3A and 3B were cut in the radial direction using a rotary saw blade. In the cut faces, neither any portion having the resin imperfectly penetrated nor any crack was found at all, and the resin had not been separated from the case 1.

### Comparative Example 3

Potting was carried out as described for Example 1, except that a resin having a viscosity of 500 mPa·s prepared by mixing 75 parts by weight of an aliphatic polyamine based curing agent (LST868 H6 produced by Vantico K.K.) with 100 parts by weight of a bisphenol F epoxy resin (LST 868 R6) was used.

The heating temperature of the resin during potting was measured as described for Example 1 and found to be 155° C at the highest.

After curing of the resin, the sealing bodies were cut in the radial direction using a rotary saw blade. In the cut faces, large cracks had been formed in the central portions.

### Industrial Applicability

The hollow fiber membrane module of the invention has a structure, in which raw water is supplied into a filtration chamber containing a hollow fiber membrane and surrounded by a first sealing body having the open ends of the numerous hollow fiber membranes constituting the hollow fiber membrane bundle, a cylindrical case and a second sealing means, through a raw water supply port formed in the cylindrical case at a position near the second sealing body, and in which the drain of backwashing is discharged through a drain port formed in the second sealing body. So, the raw water supply port is separate from the drain port for backwashing, and the suspended matter is not accumulated in the portions where raw water passes. Therefore, when raw water is supplied again after completion of backwashing, it does not happen that the suspended matter goes into the filtration chamber. Thus, a hollow fiber membrane module with stable filtration performance maintained can be presented.

Backwashing can cause the suspended matter to be accumulated in the drain port formed in the second sealing body, but the suspended matter flows into the filtration chamber together with compressed air during aeration flushing, and is discharged from the air discharge port formed in the cylindrical case at a position near the first sealing body. So, a hollow fiber membrane module with the filtration performance stably maintained without allowing the suspended matter to be accumulated in the hollow fiber membrane bundle can be presented.

## Claims

1. A hollow fiber membrane module, comprising (a) a cylindrical case, (b) a first sealing body provided for sealing one end of the cylindrical case, (c) a second sealing body provided for sealing the other end of the cylindrical case, (d) a first cap provided for the cylindrical case outside the first sealing body, (e) a second cap provided for the cylindrical case outside the second sealing body, (f) a filtration chamber formed by the inner wall surface of the first sealing body, the inner wall surface of the second sealing body and the inner wall surface of the cylindrical case, (g) a first chamber formed by the inner wall surface of the first cap and the outer wall surface of the first sealing body, (h) a second chamber formed by the inner wall surface of the second cap and the outer wall surface of the second sealing body, (i) a hollow fiber membrane bundle accommodated in the filtration chamber and attached to the first sealing body, with one end of the bundle opened toward the first chamber, and attached to the second sealing body, with the other end of the bundle closed against the second chamber; or attached to the first sealing body, with both the ends of the bundle opened toward the first chamber, the entire bundle being curved in U-shape, (j) a raw water supply port formed in the cylindrical case and opened toward the filtration chamber at a position near the second sealing body, (k) an air discharge port formed in the cylindrical case and opened toward the filtration chamber at a position near the first sealing body, (l) fluid flow holes for allowing the flow of air and drain, formed in the second sealing body through the second sealing body from the filtration chamber, (m) a filtrate delivery port formed in the first cap and opened toward the first chamber, and (n) a drain port formed in the second cap and opened toward the second chamber.

2. A hollow fiber membrane module, according to claim 1, wherein the minimum lateral cross sectional area defined by the inner circumferential face of the cylindrical case is 150 cm² or more and the packing rate of the hollow fiber membranes constituting the hollow fiber membrane bundle at the inner wall surface position of the first sealing body is in a range of 40 to 70%.

3. A hollow fiber membrane module, according to claim 1, wherein at the first sealing body and/or the second sealing body, the hollow fiber membrane bundle attached to the sealing body/bodies is kept apart from the inner wall surface of the cylindrical case by means of a spacer/spacers protruded from the inner wall surface of the cylindrical case.

4. A hollow fiber membrane module, according to claim 3, wherein the protruding height of the spacer(s) from the inner wall surface of the cylindrical case is in a range of 2 to 10 mm.

5. A hollow fiber membrane module, according to claim 4, wherein the face(s) of the spacer(s) on the sealing body side(s) is/are inclined in the direction leaving from the inner wall surface(s) of the sealing body/bodies toward the center of the cylindrical case.

6. A hollow fiber membrane module, according to claim 1, a cover that can be opened and closed to allow the repair of the hollow fiber membranes of the hollow fiber membrane bundle attached to the first sealing body is provided at the crest of the first cap.

7. A hollow fiber membrane module, according to claim 1, wherein the second cap is provided with an air supply port having a restriction opened toward the second chamber and a check valve.

8. A hollow fiber membrane module, according to claim 1 or 2, wherein the cylindrical case is a blow-molded article or thermoformed article made of a thermoplastic resin.

9. A hollow fiber membrane module, according to claim 8, wherein the thermoplastic resin is a polyvinyl chloride resin.

10. A hollow fiber membrane module, according to claim 9, wherein the polyvinyl chloride resin contains a non-lead compound as a thermal stabilizer.

11. A hollow fiber membrane module, according to claim 1 or 2, wherein the cylindrical case is made of an acrylonitrile-X-styrene copolymer (AXS) resin.

12. A hollow fiber membrane module, according to claim 11, wherein the X denotes ethylene propylene rubber or acrylic rubber.

13. A hollow fiber membrane module, according to claim 1, wherein the resin used to form the first sealing body and/or the second sealing body is an epoxy resin having bisphenol represented by the following general formula 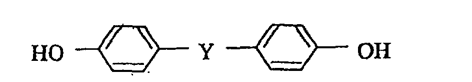 (where Y denotes an alkylene group).

14. A hollow fiber membrane module, according to claim 13, wherein the Y is represented by 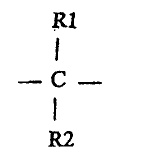 (where R1 and R2 denote, respectively independently, a CₙH₂ₙ₊₁ (where n denotes 0 or an integer of 2 or more)).

15. A hollow fiber membrane module, according to claim 13 or 14, wherein the epoxy resin is a bisphenol F type epoxy resin.

16. A hollow fiber membrane module, according to claim 13, wherein the epoxy resins penetrates into pore spaces formed in the membrane of the hollow fiber membrane bundle by 1 vol% or more of the volume of the pore spaces.

17. A hollow fiber membrane module, according to claim 1, wherein the filtration chamber is of pressurization type in which it is pressurized at higher than the atmospheric pressure during filtration or backwashing.

18. A hollow fiber membrane module unit, comprising the hollow fiber membrane module described in claim 1 and one more identical hollow fiber membrane modules connected with each other, wherein the respective air discharge ports of the plural hollow fiber membrane modules are connected with a common pipe that is located at a position lower than the respective air discharge ports.

19. A hollow fiber membrane module unit, according to claim 18, wherein the plural hollow fiber membrane modules are mounted in plural rows on a frame.

20. A hollow fiber membrane module unit, according to claim 19, wherein the plural rows of hollow fiber membrane modules are positioned symmetrically about a line or zigzag.

21. A hollow fiber membrane module unit, according to claim 20, wherein the respective raw water supply ports of the plural hollow fiber membrane modules are connected with a common raw water supply pipe, and the filtrate delivery ports of the plural hollow fiber membrane modules are connected with a common filtrate delivery pipe.

22. A hollow fiber membrane module unit, according to claim 20, wherein at least one of the pipes connected with the raw water supply ports, the air discharge ports, the filtrate delivery ports and the drain ports is connected by means of a loose joint at the connection concerned.

23. A method of producing a hollow fiber membrane module as the hollow fiber membrane module described in claim 1, **characterized in that** when said hollow fiber membrane bundle accommodated in said cylindrical case of 150 cm² or more in the minimum lateral cross sectional area defined by the inner wall surface of the cylindrical case is bonded and fastened at the ends thereof using a resin while said first sealing body is formed, respectively by means of stationary potting, the resin is cured with the curing reaction temperature of the resin at the central portion of the formed first sealing body controlled at 120°C or lower.

24. A method of producing a hollow fiber membrane module, according to claim 23, wherein the viscosity of the resin at the start of the stationary potting is in a range of 100 to 5,000 mPa·s.

25. A method of producing a hollow fiber membrane module, according to claim 23, wherein the resin is an epoxy resin having bisphenol represented by the following general formula 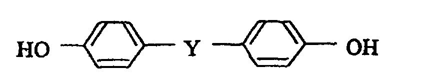 (where Y denotes an alkylene group).

26. A method of producing a hollow fiber membrane module, according to claim 25, wherein the Y is represented by 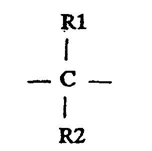 (wherein R1 and R2 denote, respectively independently, CₙH₂ₙ₊₁ (where n denotes 0 or an integer of 2 or more)).

27. A method of producing a hollow fiber membrane module, according to claim 26, wherein the resin is a bisphenol F epoxy resin.
